# EUROPÄISCHE PATENTANMELDUNG

(11) **EP 1 798 136 A2**
(43) Veröffentlichungstag der Anmeldung: **20.06.2007**
(21) Anmeldenummer: 06125894.3
(22) Anmeldetag: 12.12.2006
(51) Int. Cl.: B62D 33/06

(54) **Nutzfahrzeugkabine mit Rückwand**

(30) Priorität: 13.12.2005 DE 102005060005; 18.09.2006 DE 102006044413
(71) Anmelder: GRAMMER AG, 92224 Amberg (DE)
(72) Erfinder: Tomforde, Johann, D-71069 Sindelfingen (DE); Moreno, Claudio, D-71065 Sindelfingen (DE)
(74) Vertreter: Hannke, Christian

(57) **Zusammenfassung**

Nutzfahrzeugkabine eines Lastkraftwagens mit einer Rückwand (13, 14), wobei der Lastkraftwagen eine Sattelzugmaschine und einen Auflieger umfasst, wobei bezogen auf die Fahrzeugbreite im mittleren Bereich der Rückwand (13, 14) eine Ausbuchtung (15) zur Fahrzeugrückseite hin angeordnet ist, deren Höhe der Höhe der Nutzfahrzeugkabine entspricht.

## Beschreibung

Die Erfindung betrifft eine Nutzfahrzeugkabine eines Lastkraftwagens mit einer Rückwand, insbesondere für Lastkraftwagen mit einer Sattelzugmaschine und einem Auflieger, gemäß dem Oberbegriff des Patentanspruches 1.

Herkömmlicherweise sind Nutzfahrzeugkabinen für Personen, insbesondere Nutzfahrzeugkabinen von Lastkraftwagen, mit einer Rückwand ausgestattet, die zum Hänger hingewandt mehr oder weniger in einer Ebene verläuft, also sich sowohl in horizontaler als auch in vertikaler Richtung senkrecht zur Fahrzeuglängsachse erstreckt. Derartige Nutzfahrzeugkabinen sind in ihrem Rückwandbereich zumeist mit Quer- und/oder Längsversterbungen in Form von eingearbeiteten strebenartige Blechverformungen oder mit separaten Trägern versehen, um eine Stabilität über eine derart relativ großflächige Wand zu erhalten.

Weiterhin sind Nutzfahrzeugkabinen für Lastkraftwagen bekannt, die in ihrem vorderen Bereich zwei Fahrzeugsitze, nämlich den Fahrersitz und den Beifahrersitz, aufweisen und in ihrem hinteren Bereich ein Schlafabteil mit einem oder zwei aufklappbaren Bett/Betten beinhalten, die sich quer zur Fahrzeuglängsachse erstrecken und zumeist an einer Innenseite der Rückwand, die hierfür entsprechend formstabil ausgebildet sein muss, befestigt sind. Hierbei ist der Fahrzeugsitzbereich als erster Funktionsraumbereich mittels eines auf- und zuziehbaren Vorhanges von dem Schlafbereich abtrennbar, um auch in diesem hinteren einen weiteren Funktionsraumbereich darstellenden Schlafbereich die zum Schlafen notwendige Abdunklung zu erhalten. Weitere Funktionsraumbereiche zum Benutzen von Sanitäreinrichtungen oder Kochgelegenheiten sind bisher für Nutzfahrzeugkabinen nicht bekannt.

Herkömmliche große Nutzfahrzeugkabinen für Lkws weisen eine Grundfläche von ca. 2,0 x 2,3 m auf. Hierdurch wird ein begrenztes Raumvolumen - sofern die Nutzfahrzeugkabine die übliche Kabinenbauhöhe nicht übersteigt - für die Nutzung des Innenraums vorgegeben.

Demzufolge liegt der vorliegenden Erfindung die Aufgabe zugrunde, eine Nutzfahrzeugkabine mit Rückwand für Personen, insbesondere eine Nutzfahrzeugkabine von Lastkraftwagen zur Verfügung zu stellen, die bei Verwendung für herkömmliche Lastkraftwagen mit üblichen Abmaßen auch unter Berücksichtigung eines für ein behinderungsfreies Schwenken eines auf der Sattelmaschine aufliegenden Hängers bzw. Aufliegers notwendigen freien Schwenkbereiches ein größeres Raumvolumen zur Verfügung stellt.

Diese Aufgabe wird durch die Merkmale des Patentanspruches 1 gelöst.

Die erfindungsgemäße Nutzfahrzeugkabine ist mit einer Rückwand ausgestattet, die in ihrem mittleren Bereich, in horizontaler Richtung betrachtet, eine Erweiterung zu einem aufliegenden Hänger hin in Form einer Ausbuchtung aufweist, die sich vorzugsweise über die gesamte Höhe der Nutzfahrzeugkabine in vertikaler Richtung erstreckt. Da dieser mittlere Bereich der Rückwand in einem Bereich liegt, der bei einer Schwenkbewegung eines auf der Zugmaschine aufliegenden Hängers bzw. Aufliegers nicht von dem Hänger durchlaufen wird, findet hierdurch eine vorteilhafte Nutzung einer bisher ungenutzten Grundfläche der Zugmaschine statt. Auf diese Weise wird die Grundfläche des Innenraums der Nutzfahrzeugkabine rückseitig vergrößert und kann durch die Anordnung eines weiteren Funktionsraumbereiches, in dem beispielsweise eine Duscheinrichtung angeordnet ist, vorteilhaft genutzt werden.

Bevorzugt weist eine derartige nach außen gewandte Ausbuchtung der Rückwand in ihrem mittleren Bereich eine horizontal sich erstreckende Grundfläche auf, die einem Halbkreis oder einer Kreisbogenfläche, die eine geringere Fläche als einen Halbkreis darstellt, entspricht. Hierdurch wird eine behinderungsfreie Schwenkbewegung des rückwärtig aufgelegten Hängers, der zumeist eine Vorderseite mit einer sich in einer Ebene erstreckenden Fläche aufweist, sichergestellt.

Alternativ kann die Grundfläche der nach außen gerichteten Ausbuchtung trapezförmig, dreieckförmig, rechteckförmig, quadratisch oder jede andere Form zur Bildung einer derartigen Ausbuchtung aufweisen.

Die vertikale Erstreckung der Rückwand in ihrem Ausbuchtungsbereich kann anstelle einer Gesamterstreckung über die gesamte Höhe der Nutzfahrzeugkabine bzw. der Rückwand auch geringer sein, sodass hierdurch vorteilhaft beispielsweise in der oberen Hälfte der Rückwand durchgehende Querverstrebungen zur Stabilisierung der Rückwand weiterhin angeordnet sein können, während in der unteren Hälfte eine in Fahrzeugbreitenrichtung gesehene Unterbrechung der Rückwand durch die Ausbuchtung vorhanden ist.

Eine derartige Ausbuchtung der Rückwand mit begrenzter Höhe wird beispielsweise als Notausstieg durch Verwendung eines öffnungsfähigen Ausbuchtungswandabschnittes oder eines zerbrechlichen Materials verwendet. Somit ist es möglich, dass ein Fahrer, der durch unbefugte im vorderen Bereich der Nutzfahrzeugkabine im Bereich der Fahrer- und Beifahrertüren eindringende Personen bedroht wird, durch den Notausstieg im hinteren Bereich der Nutzfahrzeugkabine fliehen kann. Selbstverständlich kann ein derartiger Notausstieg durch Verwendung des entsprechenden Materials oder beispielsweise einer öffnungsfähigen Tür auch bei innenseitiger Verwendung der Ausbuchtung als Teil einer Duschkabine Anwendung finden.

Die Duschkabine weist unabhängig von dem Vorhandensein einer Notausstiegstür eine kreisförmige Grundfläche mit einem Radius von vorzugsweise 25 - 60 cm, bevorzugt von 37 cm auf. Somit ergibt sich eine in Fahrzeugbreitenrichtung erstreckende Breite des Rückwandabschnittes von 72 cm, in dem sich die Ausbuchtung befindet. Die links- und rechtsseitig sich anschließenden Rückwandabschnitte weisen vorteilhaft beispielsweise 80 cm jeweils in ihrer Breite auf.

Bei Verwendung der Ausbuchtung als Rückwandabschnitt für eine Duschkabine, die in diesem Funktionsraumbereich des Innenraums der Nutzfahrzeugkabine angeordnet sein kann, können ober- und/oder unterseitig bogenförmige Schienenelemente zur Verschiebung mindestens einer verschiebbaren Duschkabinentür an dem Rückwandabschnitt, der vorzugsweise zylinderwandsegmentartig ausgebildet ist, angebracht sein. Hierdurch ist es möglich, dass eine, jedoch bevorzugt zwei Duschkabinentüren, die ebenso einen Ausschnitt einer Zylinderwand darstellen, durch einfaches Verschieben im rückwärtigen Bereich der Duschkabine, nämlich im Bereich des zylinderwandsegmentartigen Rückwandabschnittes, bei geöffneter Duschkabine angeordnet und aufgehoben werden können. Wenn die Duschkabine geschlossen werden soll, werden beide Duschkabinentüren - vorzugsweise in entgegengesetzte Richtungen - auf der Kreisbogenbahn verschoben, um eine geschlossene Zylinderwand für die spritzwasser- und vorteilhafterweise wasserabdichtende Bildung einer vollständig geschlossenen Duschkabine zu erhalten.

Um das Verschieben der Duschkabinentüren innerhalb des Funktionsraumbereiches gegenüber den Schienenelementen zu ermöglichen, weisen die Duschkabinentüren Rollen, die vorzugsweise mit Verbindungselementen an diesen angeordnet sind, auf. Selbstverständlich kann jede andere Art von komplementär ausgebildeten Elementen, die zur Aufnahme in Führungsschienen vorgesehen sind, verwendet werden.

Die Duschkabinentüren können zur Arretierung in ihrer geöffneten Stellung direkt vor dem Rückwandabschnitt mittels einer Fixiereinrichtung fixiert werden. Auf diese Weise wird ein ungewolltes Verschieben der Duschkabinentür bei einer Schräglage des LKW's oder dergleichen vermieden. Idealerweise ist eine derartige Fixiereinrichtung durch ein muldenartiges Hineinrollen der Rollen innerhalb der Führungsschienen gegeben, so dass eine separate Betätigung einer Fixierungseinrichtung für das Lösen der Duschkabinentüren aus ihrer Fixierstellung nicht notwendig ist.

Gemäß einer bevorzugten Ausführungsform ist die Ausbuchtung oberseitig mit einem lichttransparenten Dachabschnitt ausgebildet, um hierdurch verstärkt einen Lichteinfall in dem ansonst dunklen hinteren Bereich der Nutzfahrzeugkabine zu erreichen. Dies kann gegebenenfalls mit einer Dachluke, die zumindest teilweise den oberseitigen Dachabschnitt umfasst, kombiniert werden.

Vorzugsweise ist der Rückwandabschnitt an eine kabineninnenseitig angebrachte Säule, an welcher Duscharmaturen angebracht sind, angrenzend angeordnet. Hierdurch wird erreicht, dass platzsparend die für den Duschvorgang erforderlichen Armaturen untergebracht sind, wobei die Säule zeitgleich als Schwenkachse für das Öffnen des Rückwandabschnittes, sofern dieser als Tür ausgebildet ist, dienen kann.

Eine Länge der Nutzfahrzeugkabine in Fahrzeuglängsrichtung setzt sich aus der Länge des vorderen Fahrerbereiches mit 100 - 150 cm, vorzugsweise 130 cm, und der Länge des hinteren, weitere Funktionsraumbereiche aufweisenden Bereiches von 50 - 100 cm, vorzugsweise 70 cm, zusammen.

Durch die Anordnung einer sich über die gesamte Höhe der Nutzfahrzeugkabine erstreckenden Ausbuchtungsrückwandabschnittes wird die Rückwand in zwei gleichgroße Segmente aufgeteilt, die mittels eines gemeinsamen Herstellungswerkzeuges baugleich zur Reduzierung von Herstellungskosten produziert werden können.

Gemäß einer bevorzugten Ausführungsform weist der Funktionsraumbereich, der zumindest in Teilen den durch die Ausbuchtung geschaffenen neuen Innenraum umfasst, oberseitig eine Dachluke im Dach der Nutzfahrzeugkabine auf, um zum einen Lichteinfall im hinteren Bereich der Nutzfahrzeugkabine und zum anderen die Abführung von während des Duschens entstehenden Wasserdampfes zu ermöglichen.

Zusätzlich kann eine derartige Dachluke als Notausstieg verwendet werden. Vorzugsweise wird hierfür lichttransparentes Material verwendet.

Die in fahrzeugbreiter Richtung gesehen im mittleren Bereich angeordnete Ausbuchtung der Rückwand ist entweder einstöckig mit den an die Ausbuchtung sich links- und rechtsseitig anschließenden Rückwandteilen hergestellt oder in Form von drei anfänglich voneinander getrennt hergestellte Teile mit den links- und rechtsseitigen ebenen Rückwandanteilen verbunden. Hierfür weist die Rückwand im Bereich der Verbindungsstellen sich vertikal erstreckende Säulen zur Stabilisierung und zum vorteilhaften schnellen Verbinden der einzelnen Teile, beispielsweise mittels einer Schweißverbindung, auf.

In den Zeichnungen ist jeweils die gesamte Nutzfahrzeugkabine in ihrem Innenraum einschließlich zusätzlicher Schlafplätze beispielhaft dargestellt. Es zeigen:
- Fig. 1:: In einer perspektivischen räumlichen Darstellung eine Nutzfahrzeugkabine mit ausgebuchteter Rückwand und insgesamt vier Funktionsraumbereichen;
- Fig. 2:: In einer Draufsicht den Innenraum der Nutzfahrzeugkabine mit erfindungsgemäß ausgestatteter Rückwand und insgesamt vier Funktionsraumbereichen;
- Fig. 3: In einer perspektivischen Ausschnittsdarstellung eine Nutzfahrzeugkabine mit Teilen der erfindungsgemäßen Rückwand und einer geöffneten Duschkabine;
- Fig. 4: Eine perspektivische Ausschnittsdarstellung der in Fig. 3 dargestellten Nutzfahrzeugkabine mit geschlossener Duschkabine;
- Fig. 5: In einer perspektivischen Darstellung die erfindungsgemäße Rückwand als separate Widergabe;
- Fig. 6: In einer Seitendarstellung die in Fig. 5 wiedergegebene Rückwand;
- Fig. 7: In einer perspektivischen Ausschnittsdarstellung Teile der Duschkabine mit Duschkabinentür und Führungsschienen;
- Fig. 8 und Fig. 9: Aufhängungen der Duschkabinentüren in Führungsschienen gemäß Ausschnittsdarstellungen, und
- Fig. 10: In einer Ausschnittsdarstellung eine Säule mit Duscharmaturen.

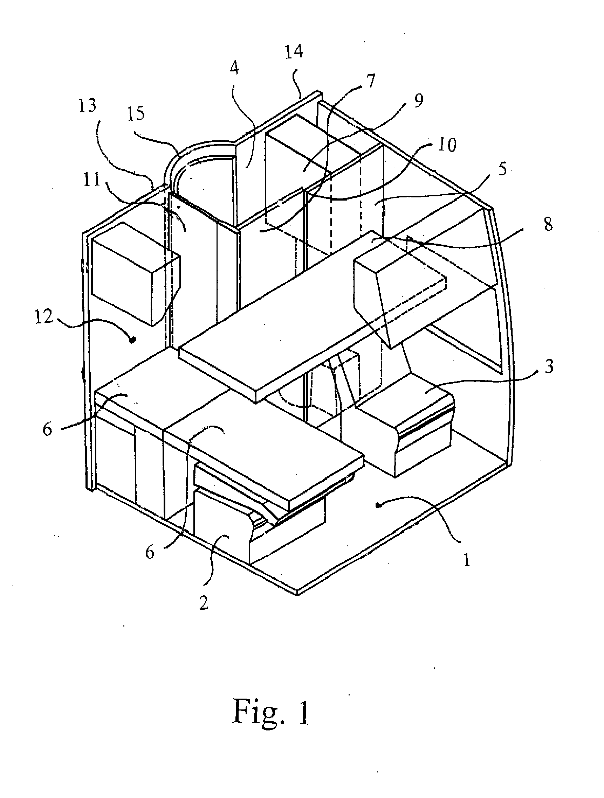

In Fig. 1 ist in einer perspektivischen räumlichen Darstellung von schräg vorne schematisch ein Innenraum einer erfindungsgemäßen Nutzfahrzeugkabine mit dazugehöriger Rückwand dargestellt. Die Nutzfahrzeugkabine weist einen ersten Funktionsraumbereich 1 mit Fahrzeugsitzen 2 und 3 auf. Dieser erster Funktionsraumbereich ist von einem zweiten Funktionsraumbereich 4 mittels einer Trennwand 5, einer in diesem Falle aufgeklappten Trennwand 6, welche zugleich zu einem Bett umgebaut werden kann, und einer dazwischen angeordneten Tür 7 getrennt.

Ein an der Decke angeordnetes Bett 8 kann im erstem Funktionsraumbereich nach unten abgehängt bzw. nach unten verschoben werden und bei Nichtgebrauch wieder nach oben verschoben und an der Decke der Nutzfahrzeugkabine befestigt werden.

Ein dritter Funktionsraumbereich 9 ist gegenüber dem zweiten Funktionsraumbereich 4 mittels der ersten Tür 7, die an einer Säule 10 schwenkbar gelagert ist, verschließbar. Die Tür 7 kann bei einer durchgeführten 90°-Schwenkung dazu verwendet werden, entweder den ersten Funktionsraumbereich 1 gegenüber dem zweiten Funktionsraumbereich 4 abzutrennen oder den zweiten Funktionsraumbereich 4 gegenüber dem dritten Funktionsraumbereich 9 abzutrennen.

Eine zweite Tür 11 dient dazu, einen vierten Funktionsraumbereich 12, der als abgeschlossener Raum bei hochgeklapptem Bett 6 besteht, gegenüber dem zweiten Funktionsraumbereich 4 abzutrennen.

Eine Rückwand 13, 14 und 15 der Nutzfahrzeugkabine besteht aus links- und rechtsseitig angeordneten Ebenen des ersten und des zweiten Rückwandabschnittes 13 und 14 sowie einem dazwischen angeordneten kreisförmig, bezogen auf eine Querschnittsbetrachtung in der Horizontalen, ausgebildeten Rückwandabschnitts 15.

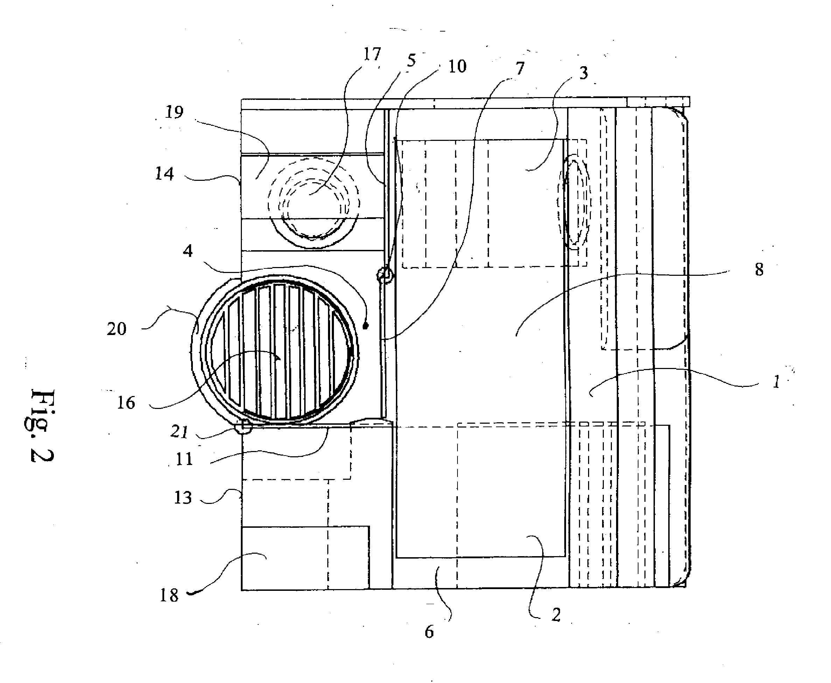

In Fig. 2 ist in einer Draufsicht die erfindungsgemäße Nutzfahrzeugkabine mit insgesamt vier Funktionsraumbereichen und der ausgebuchteten Rückwand dargestellt. Der Darstellung ist deutlich zu entnehmen, dass in dem zweiten Funktionsraumbereich 4 eine kreisförmige Grundfläche 16 in gerippter Form oder mit Durchbrüchen angeordnet ist, um die Grundfläche für eine hier nicht näher dargestellte Duscheinrichtung zur Verfügung zu stellen.

Diese Grundfläche 16 kann ebenso wannenartig ausgebildet sein und/oder randseitig Wasserablaufrinnen in Kreisform zum Ablaufen des Wassers über einen Boden der Nutzfahrzeugkabine aufweisen.

In dem dritten Funktionsraumbereich 9 ist eine Toilette 17 und im vierten Funktionsraumbereich ist ein Hängeschrank mit darunterliegendem Kühlschrank als Kücheneinrichtung angedeutet. Die Toilette 17 kann mit einem hoch- und runterklappbaren Waschtisch 19 abgedeckt werden.

Die im zweiten Funktionsraumbereich 4 angeordnete Duscheinrichtung ist derart angeordnet, dass der Rückwandabschnitt 15 als bogenförmig ausgestaltete Duschrückwand 20 dient. Diese Duschrückwand 20 kann für die zur Verfügungsstellung eines Notausstieges um eine Schwenkachse 21 aufgeschwenkt werden, wobei eine Entriegelung dieser türartigen Einrichtung vorzugsweise nur von innen betätigbar ist.

Die Duschrückwand 20 weist vorzugsweise ein lichttransparentes Material, wie Plexiglas, sonstige lichttransparente Kunststoffmaterialien oder auch Glas auf, um einen Lichteinfall in den hinteren Abschnitt der Nutzfahrzeugkabine zu ermöglichen.

Die Duschrückwand 20 ist gegenüber dem Rückwandabschnitt 14 mittels einer Gummidichtung, die ein Ein- und Ausdringen von Wasser verhindert, abgedichtet. Ebenso sind die Türen 7 und 11 in ihren Randbereichen mit Gummidichtungen versehen, um ein Eindringen von Wasser während eines Duschvorganges in die ersten, dritten und vierten Funktionsraumbereiche zu vermeiden.

Die Duscheinrichtung kann unterseitig zum Ablaufen des Duschwassers mit mindestens einer Durchgangsöffnung im Bodenbereich der Nutzfahrzeugkabine versehen sein. Alternativ kann das Duschwasser unterseitig in ein von unten angeordneten Abwassertank abgeleitet werden.

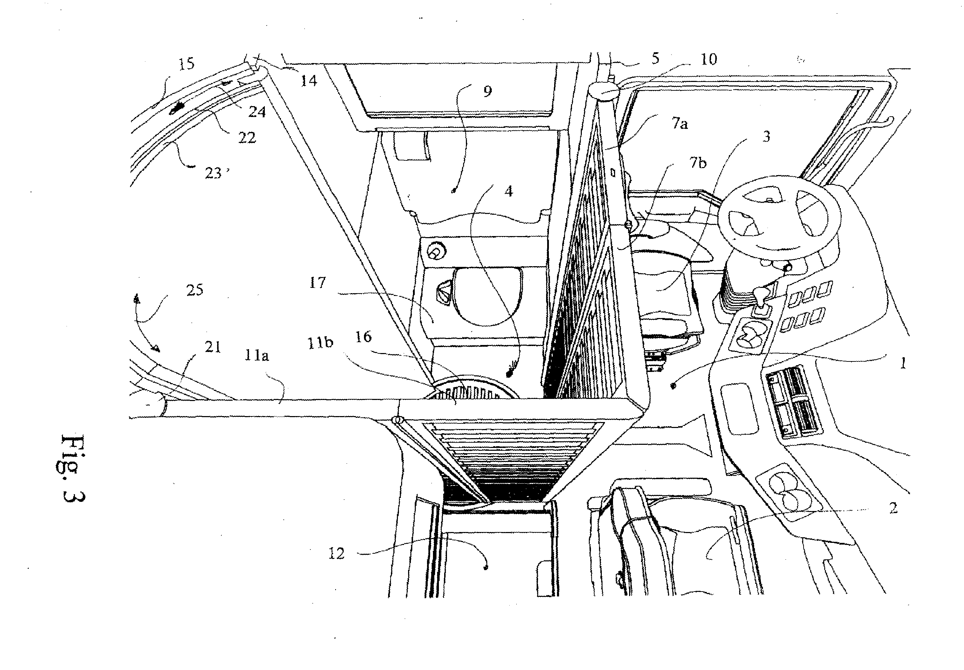

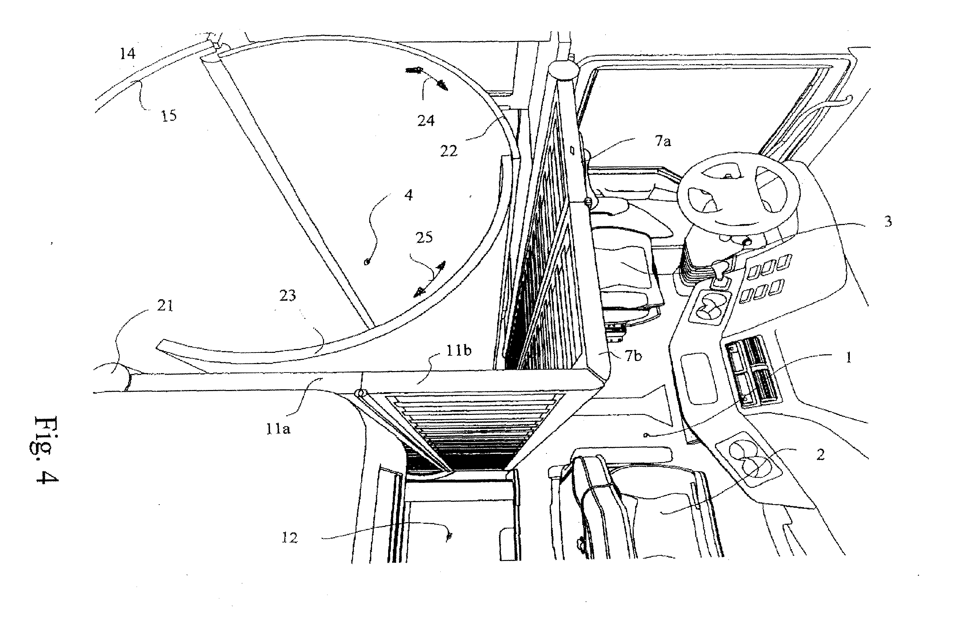

In Fig. 3 und Fig. 4 werden Ausschnittsweise perspektivische Darstellungen einer Nutzfahrzeugkabine mit einer darin integrierten Duschkabine, die in Fig. 3 im geöffneten Zustand und in Fig. 4 im geschlossenen Zustand dargestellt wird, gezeigt. Gleich und gleichbedeutende Bauteile sind mit gleichen Bezugszeichen versehen.

Diesen Darstellungen gemäß Fig. 3 und Fig. 4 ist deutlich zu entnehmen, dass in einem zweiten Funktionsraumbereich 4 eine Dusche mit einer kreisförmigen Grundfläche 16 angeordnet ist, wobei Teile der kreisförmigen Grundfläche 16 zugleich die kreisbogenförmige Grundfläche der Aussparung und somit des Rückwandabschnittes 15 darstellen.

Sowohl die erste als auch die zweite Tür sind zweiteilig mit zwei Türflügeln 7a, 7b und 11a, 11b aufgebaut.

Die Säule 21 grenzt an den Rückwandabschnitt 15 an.

Zur Bildung einer zylinderförmigen geschlossenen Duschkabine können zwei Duschkabinentüren 22, 23 auf einer Kreisbahn verschoben werden, wie es durch die Pfeile 24 und 25 wiedergegeben wird. Ein hier nicht näher dargestelltes Schienensystem ermöglicht dadurch die Bildung einer bevorzugt wasserdichten Duschkabinenwand, wobei die Duschkabinentüren 23, 22 im geöffneten Zustand idealerweise hintereinander angeordnet an den Rückwandabschnitt 15 angepasst und fixiert werden können.

Selbstverständlich weisen die Duschkabinentüren zum Öffnen und Schließen hier nicht näher dargestellte Griffe als Betätigungselemente auf.

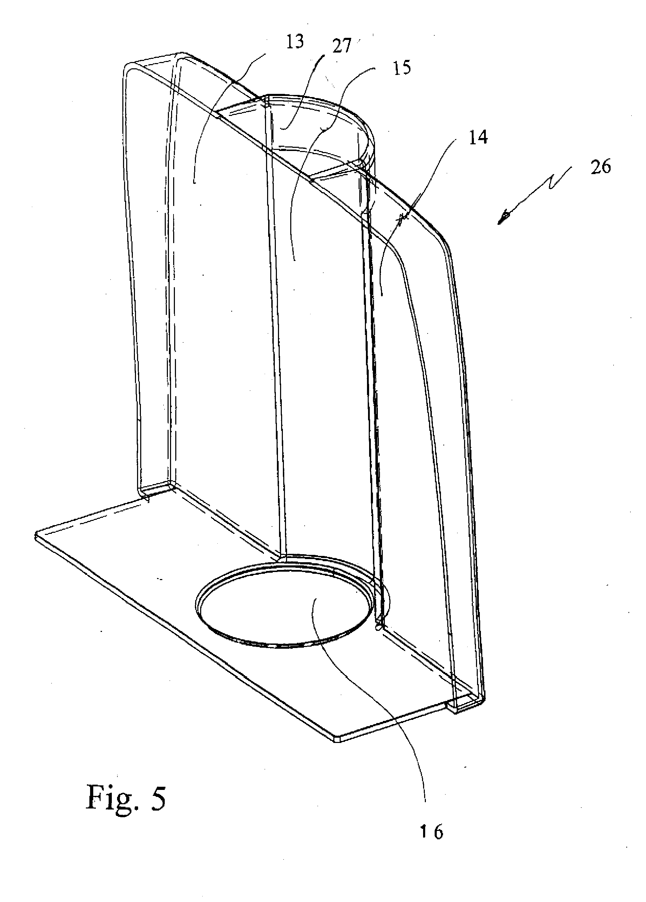

In Fig. 5 wird in einer perspektivischen Darstellung die gesamte Rückwand 26, wie sie beispielsweise nachträglich in eine Nutzfahrzeugkabine eingebaut werden kann, gezeigt. Die Rückwand 26 besteht aus den ebenausbildeten Rückwandabschnitten 13 und 14 und dem kreisbogenförmig ausgebildeten Rückwandabschnitt 15, der oberseitig einen Dachbereich 27 aufweist.

Der oberseitige Dachbereich 27 ist bevorzugt transparent ausgebildet, um in dem rückwärtigen Nutzfahrzeugkabinenbereich natürliches Licht einfallen lassen zu können.

Selbstverständlich kann der oberseitige Dachbereich 27 auch als Dachluke ausgebildet sein.

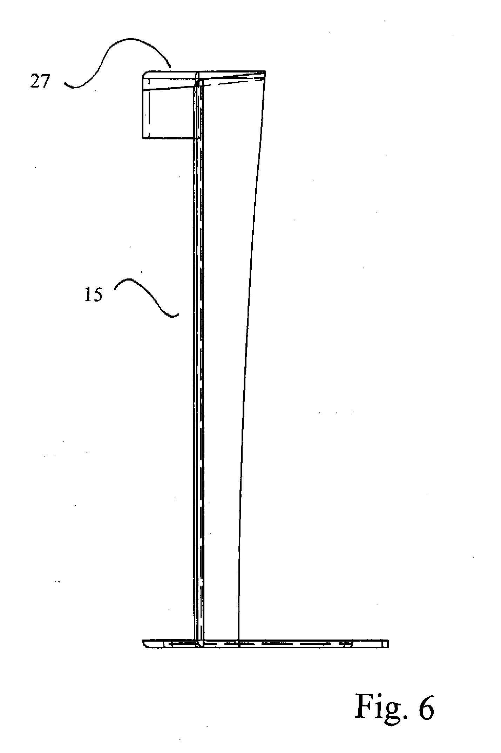

In Fig. 6 ist die in Fig. 5 wiedergegebene Rückwand als Seitendarstellung gezeigt. Diese weist idealerweise einen Bodenbereich zur besseren Verankerung mit dem restlichen Nutzfahrzeugkabinenboden auf.

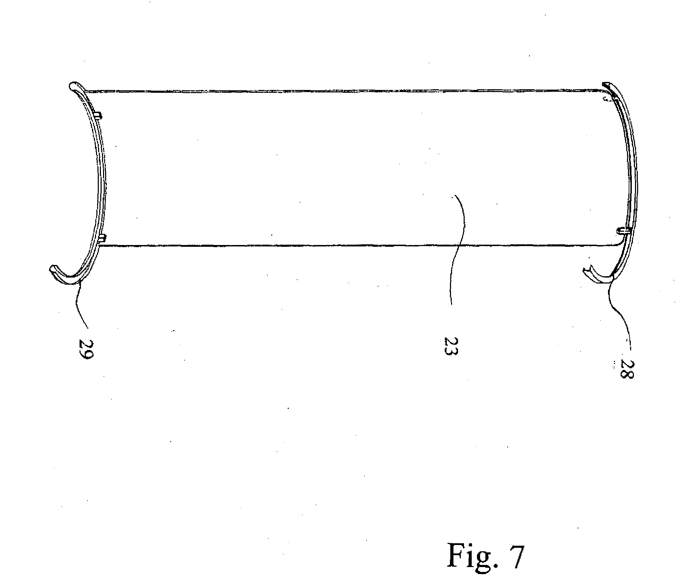

In Fig. 7 ist in einer perspektivischen Darstellung ausschnittsweise ein Teil der Duschkabine wiedergegeben, wie er von der Innenseite aus betrachtet vor dem erfindungsgemäßen Rückwandabschnitt ausgebildet sein kann. Eine Duschkabinentür 23 ist entlang von Führungsschienen 28 und 29, die ober- und unterseitig an dem Rückwandabschnitt oder den benachbarten Decke- und Bodenelementen angeordnet sind, aufgehängt.

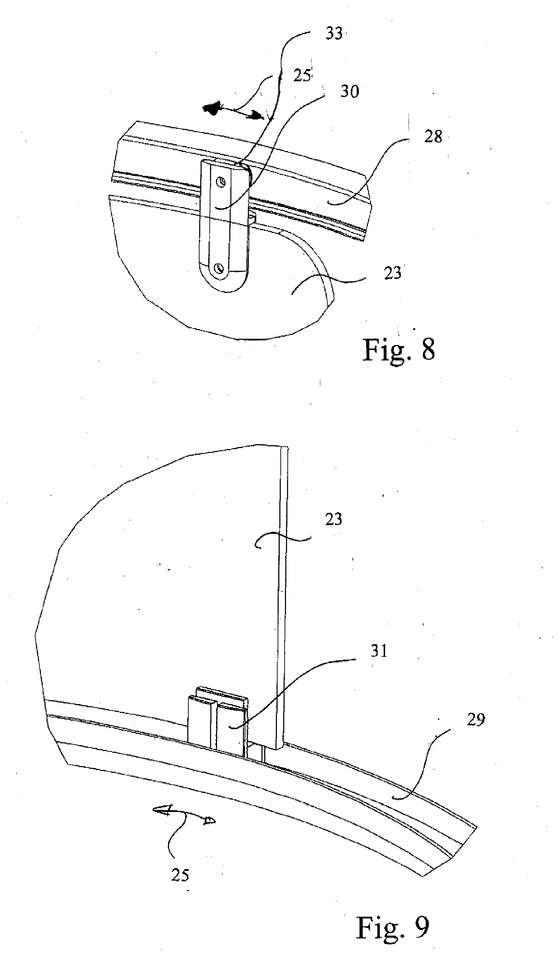

Aus Fig. 8 und Fig. 9, die Ausschnittdarstellungen der Aufhängungen der Duschkabinentüren gegenüber dem Führungsschienen darstellen, geht hervor, dass mittels Verbindungselemente 30, die mit den Duschkabinentüren 23 verschraubt sind, Rollen 33 mit der Duschkabinentür 23 verbunden sind, um diese in den Führungsschienen abrollen zu lassen.

Zusätzlich oder alternativ können Verbindungselemente 31 als Gleitelemente, die innerhalb der Führungsschiene 29 gleitend gelagert sind, ausgebildet sein.

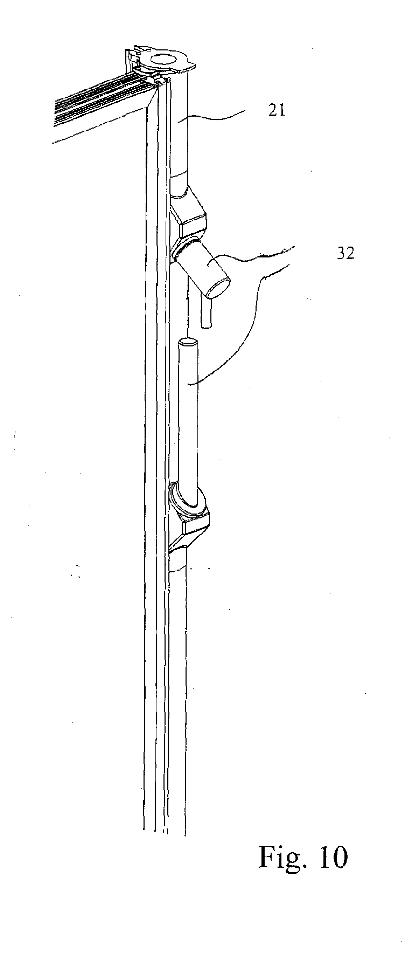

In Fig. 10 wird in einer Ausschnittsdarstellung ein Beispiel einer an den Rückwandabschnitt angrenzenden Säule 21 mit einer darin angebrachten Armatur 32 zum Duschen dargestellt. Selbstverständlich muss für eine Anordnung einer derartigen Armatur die Säule 21 innenseitig mit Wasserzuführleitungen versehen sein. Zeitgleich kann die Säule 21 als Schwenkachse für die innenseitige zweite Tür und gegebenenfalls zusätzlich für eine rückwärtige Tür, die zugleich dem kreisbogenförmigen Rückwandabschnitt darstellt, dienen.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: erster Funktionsraumbereich
- 2, 3: Fahrzeugsitze
- 4: zweiter Funktionsraumbereich
- 5: Trennwand
- 6: aufklappbare Trennwand, Bett
- 7, 7a, 7b: erste Tür
- 8: Bett
- 9: dritter Funktionsraumbereich
- 10: Säule
- 11, 11a, 11b: zweite Tür
- 12: vierter Funktionsraumbereich
- 13, 14, 15: Rückwandabschnitte
- 16: Bodenfläche der Dusche
- 17: Toilette
- 18: Hängeschrank und Kühlschrank
- 19: Waschtisch
- 20: Duschrückwand
- 21: Schwenkachse/Säule
- 22, 23: Duschkabinentüren
- 24, 25: Verschiebrichtungen
- 26: gesamte Rückwand
- 27: Dachabschnitt
- 28, 29: Führungsschiene
- 30, 31: Verbidnungselemente
- 32: Duscharmaturen
- 33: Rollen

## Patentansprüche

1. Nutzfahrzeugkabine eines Lastkraftwagens mit einer Rückwand (13, 14), wobei der Lastkraftwagen eine Sattelzugmaschine und einen Auflieger umfasst,
**dadurch gekennzeichnet, dass**
bezogen auf die Fahrzeugbreite im mittleren Bereich der Rückwand (13, 14) eine Ausbuchtung (15) zur Fahrzeugrückseite hin angeordnet ist, deren Höhe der Höhe der Nutzfahrzeugkabine entspricht.

2. Nutzfahrzeugkabine nach Anspruch 1,
**dadurch gekennzeichnet, dass**
die Ausbuchtung (15) als eine horizontal ausgerichtete Grundfläche eine Kreisbogenfläche (16) aufweist.

3. Nutzfahrzeugkabine nach Anspruch 1,
**dadurch gekennzeichnet, dass**
die Ausbuchtung als eine horizontal ausgerichtete Grundfläche eine dreieckförmige, quadratische, rechteckförmige oder trapezförmige Fläche aufweist.

4. Nutzfahrzeugkabine nach einen der vorangegangenen Ansprüche,
**dadurch gekennzeichnet, dass**
die Ausbuchtung einen Rückwandabschnitt (15) einer Duschkabine als Funktionsraumbereich (4) des Innenraums der Nutzfahrzeugkabine darstellt.

5. Nutzfahrzeugkabine nach Anspruch 4,
**dadurch gekennzeichnet, dass**
der Zylinderwand segmentartige Rückwandabschnitte (15) der Duschkabine und/oder unterseitig bogenförmige Schienenelemente (28, 29) zur Führung mindestens einer verschiebbaren Duschkabinentrt (22, 23) aufweist.

6. Nutzfahrzeugkabine nach Anspruch 5,
**dadurch gekennzeichnet, dass**
die Schienenelemente (28, 29) an zwei verschiebbaren Duschkabinentüren (22, 23) angebrachte Rollen (33) zumindest umfassen.

7. Nutzfahrzeugkabine nach Anspruch 5,
**dadurch gekennzeichnet, dass**
die Duschkabinentüren (22, 23) einen kreisbogensegmentförmigen Querschnitt aufweisen und zur Öffnung der Duschkabine der Form des Rückwandabschnittes (15) angepasst hintereinander vor dem Rückwandabschnitt (15) fixierbar sind.

8. Nutzfahrzeugkabine nach einer der vorangegangenen Ansprüche,
**dadurch gekennzeichnet, dass**
die Ausbuchtung oberseitig einen lichttransparenten Dachabschnitt (27) aufweist.

9. Nutzfahrzeugkabine nach Anspruch 8,
**dadurch gekennzeichnet, dass**
der Dachabschnitt (27) zumindest teilweise als Dachluke ausgebildet ist.

10. Nutzfahrzeugkabine nach einem der Ansprüche 4-9,
**dadurch gekennzeichnet, dass**
der Rückwandabschnitt (15) an eine kabineninnenseitig angebrachte Säule (21) mit Duscharmaturen (32) angrenzt.
